**Europäisches Patentamt**

**European Patent Office**

(19)

**Office européen des brevets**

(11) Numéro de publication: **0 253 712**
**B1**

(12)

# FASCICULE DE BREVET EUROPEEN

(45) Date de publication du fascicule du brevet:
**07.02.90**

(51) Int. Cl.⁴: **B29C 65/68, F16L 47/00**

(21) Numéro de dépôt: **87401553.0**

(22) Date de dépôt: **02.07.87**

(54) **Dispositif de fixation l'une à l'autre de deux parties cylindriques, notamment d'un tuyau sur un embout et son procédé de montage.**

(30) Priorité: **08.07.86 FR 8609901**

(43) Date de publication de la demande:
**20.01.88 Bulletin 88/3**

(45) Mention de la délivrance du brevet:
**07.02.90 Bulletin 90/6**

(84) Etats contractants désignés:
**BE DE ES GB IT LU NL SE**

(56) Documents cités:
**EP-A- 0 193 834**
**DE-A- 2 438 893**
**FR-A- 1 414 511**
**FR-A- 2 035 436**
**FR-A- 2 088 813**
**FR-A- 2 113 512**
**FR-A- 2 316 464**
**FR-A- 2 369 912**
**US-A- 4 129 932**

(73) Titulaire: **HUTCHINSON, 2 rue Balzac, F-75008 Paris(FR)**

(72) Inventeur: **Saint Louis Augustin, Louis Guy, 4, rue Carnot, F-45200 Montargis(FR)**

(74) Mandataire: **Orès, Bernard et al, Cabinet ORES 6, Avenue de Messine, F-75008 Paris(FR)**

ACTORUM AG

## Description

L'invention a pour objet un dispositif de fixation l'une à l'autre de deux parties cylindriques à l'aide d'un manchon en matériau thermorétractable choisi parmi les polymères rétractables, notamment les polyoléfines modifiées, les polyéthylènes et les poypropylènes et solidarisé par sa face interne sur au moins une partie de sa longueur avec la face externe d'une première desdites parties.

Elle vise, en particulier, un dispositif de fixation rapide d'un tuyau souple sur un embout comme, par exemple, une durite sur l'embout d'un radiateur ou d'un système de chauffage de véhicule automobile, sans que cette indication ait, bien entendu, quelque caractère limitatif que ce soit.

On connaît déjà des dispositifs de fixation d'un tuyau souple sur un embout dans lequel l'étanchéité entre le tuyau et l'embout, - en ce qui concerne un fluide circulant dans ledit tuyau-, est assurée par le serrage du tuyau sur l'embout à l'aide d'un organe approprié, le plus généralement un collier de serrage à bande ou fil métallique fixé au tuyau souple préalablement à sa mise en place ou rapporté sur le tuyau après positionnement de celui-ci sur l'embout.

Quel que soit le type de collier de serrage mis en oeuvre, des inconvénients liés au principe même du collier ne peuvent être écartés, comme celui de ne pouvoir présenter un cercle parfait (et par conséquent une pression uniforme sur le tuyau souple entraînant parfois des défauts d'étanchéité), celui d'exiger une gestion des approvisionnements qui doit prendre en compte les tuyaux, d'une part, les colliers et les pièces constitutives de ceux-ci, d'autre part, ou encore ceux liés au montage manuel qui ne peut exclure dans certains cas, un positionnement défectueux du collier lequel, en augmentant les temps de montage, provoque un accroissement des coûts. En outre, les dispositifs à colliers connus ne sont pas prévus pour une mise en place à l'aide de robots, ou de manipulateurs, alor que les fabricants d'automobiles qui recherchent une automatisation aussi complète que possible des chaînes de montage souhaitent pouvoir assurer le montage d'un tuyau sur un embout par des techniques de robotisation.

On connaît également des procédés de raccord de tubes à l'aide d'éléments à reprise thermique, par exemple par FR-A-2 113 512 ou US-A-4 129 932 ou FR-A-2 316 464 qui mettent en oeuvre un manchon en matériau thermorétractable, en particulier à base de polymères rétractables. Cependant, aucun de ces documents n'est concerné par le montage d'un tuyau souple sur un embout ni, a fortiori, ne s'intéresse à des procédés de montage susceptibles d'être automatisés, en particulier dans le domaine de l'industrie automobile.

Le problème existe donc, par conséquent, de fournir un dispositif et son procédé de montage qui permettent de pallier les inconvénients mentionnés ci-dessus des dispositifs à colliers connus et qui, en particulier, puissent être mis en oeuvre sur des chaînes de montage automatiques, notamment dans le domaine de l'industrie automobile, pour des tuyaux souples et des embouts.

C'est, encore, un but de l'invention de fournir un tel dispositif qui, après montage, procure une bonne liaison du tuyau à l'embout et une bonne étanchéité de cette liaison en ce qui concerne un fluide circulant dans ledit tuyau.

C'est, enfin, un but de l'invention de fournir un tel dispositif et son procédé de montage qui permettent d'abaisser les coûts d'exploitation par rapport aux dispositifs à colliers connus, tant en ce qui concerne ceux de gestion des stocks que celui du temps de montage.

Un dispositif selon l'invention, de fixation l'une à l'autre de deux parties cylindriques à l'aide d'un manchon en matériau thermorétractable choisi parmi les polymères rétractables, notamment les polyoléfines modifiées, les polyéthylènes et les polypropylènes et solidarisé par sa face interne sur au moins une partie de sa longueur avec la face externe d'une première desdites parties, est caractérisé en ce que ladite première partie est un tuyau souple et l'autre partie un embout, ledit manchon qui est rétracté sur le tuyau souple par un premier chauffage ayant des dimensions telles et étant réalisé en un matériau thermorétractable de caractéristiques telles que l'ensemble du tuyau et du manchon à une rigidité structurelle suffisante pour permettre sa manipulation sans détériorations à l'aide d'un manipulateur, d'un robot ou analogue lors de la mise en place du tuyau et du manchon formant un ensemble unitaire sur l'embout où la fixation a lieu en provoquant un deuxième rétreint dudit manchon thermorétractable.

Dans une première réalisation, le manchon est de forme cylindrique et est solidaire du tuyau souple sur la totalité ou quasi-totalité de sa longueur, une de ses extrémités affleurant l'extrémité du tuyau dont il est solidaire.

En variante, le manchon est solidaire du tuyau sur une partie seulement de sa longueur.

Dans un mode d'exécution, le manchon présente une de ses extrémités en saillie par rapport à l'extrémité libre du tuyau.

Dans une autre réalisation, le manchon est solidaire du tuyau sur une partie seulement de sa longueur et son extrémité libre, la plus voisine de l'extrémité du tuyau, est évasée en tulipe.

Dans un premier mode d'exécution d'une telle réalisation, l'extrémité en tulipe affleure celle du tuyau.

Dans un autre mode d'exécution, l'extrémité en tulipe s'étend au-delà de l'extrémité libre du tuyau, de sorte que le positionnement du dispositif par rapport à l'embout en est rendu encore plus facile.

Dans un tel mode d'exécution et après montage du dispositif sur un embout, le manchon recouvre et enserre à la fois le tuyau et ledit embout.

Le matériau constitutif du manchon du type des polyoléfines modifiées, des polyéthlènes ou des polypropylènes qui, outre qu'ils présentent les qualités voulues de rétreint, possèdent aussi intrinsèquement les caractéristiques de rigidité permettant la manipulation du dispositif par des robots ou manipulateurs de montage, est choisi pour présenter un rapport de rétreint de l'ordre de 1,5 à 3 et une temérature de rétreint d'au moins 90°C-135°C.

En variante, la rigidité structurelle du dispositif est conférée par un dimensionnement approprié du manchon, notamment de son épaisseur, qui est alors choisie, par exemple, pour des matériaux du type des polyethylènes à une valeur de l'ordre de 2 mm pour des tuyaux de 15 x 22.

Le matériau constitutif du manchon, en particulier lorsque le dispositif est destiné à trouver application dans le domaine de l'industrie automobile, est en outre choisi pour permettre des températures d'utilisation comprises entre 55 et par exemple 175°C, avec en outre une bonne tenue au fluage, une résistance chimique suffisante aux projections d'huile, de gazole, et d'essence ainsi que de bonnes caractéristiques de vieillissement en température.

Un procédé selon l'invention, de montage d'un tuyau souple sur un embout est alors caractérisé en ce que l'on forme un manchon en un matériau thermorétractable d'un diamètre légèrement supérieur à celui du tuyau, en ce que l'on rapporte sur la face interne du manchon et/ou sur la face externe du tuyau un adhésif destiné à assurer la solidarisation du manchon et du tuyau, en ce que l'on dispose le manchon sur l'extrémité du tuyau souple, en ce que l'on effectue un chauffage localisé sur au moins une partie du manchon pour provoquer un pré-rétreint de celui-ci et, par suite, la solidarisation d'au moins une partie du manchon et du tuyau, en ce que l'on met en place sur l'embout l'ensemble unitaire de rigidité suffisante formé par le tuyau et le manchon et en ce que l'on procède à une nouvelle opération de chauffage du manchon pour provoquer un nouveau rétreint et la solidarisation étanche du tuyau sur l'embout.

D'autres particularités et avantages de l'invention apparaîtront de la description qui suit de formes de réalisation, faite en référence au dessin annexé dans lequel :

- la figure 1 est une vue schématique illustrant une phase intermédiaire de fabrication d'un dispositif selon l'invention ;
- la figure 2 est une vue schématique en coupe d'un dispositif selon l'invention ;
- la figure 3 montre le dispositif fixé sur un embout ;
- la figure 4 est une vue analogue à celle de la figure 1 mais pour une autre forme de réalisation ;
- la figure 5 est une vue du dispositif correspondant ;
- la figure 6 est une vue analogue à celle des figures 1 et 4 ;
- la figure 7 est une vue du dispositif correspondant ;
- la figure 8 est une vue schématique en coupe du dispositif illustré sur les figures 6 et 7 tel que monté sur un embout.

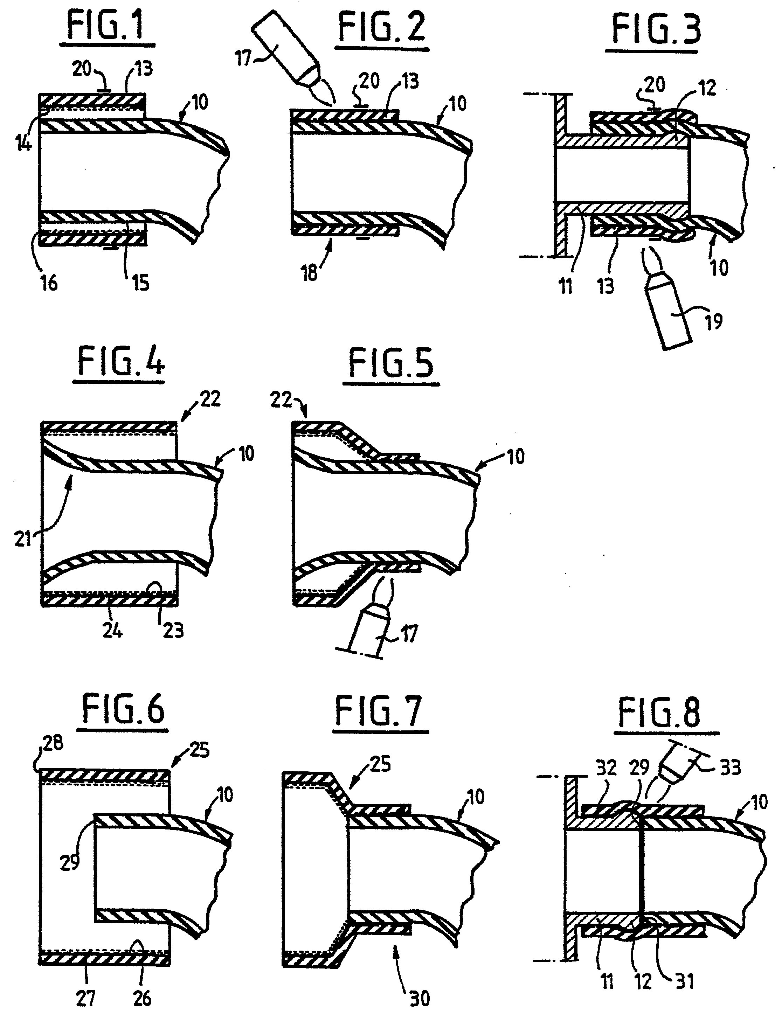

On se réfère d'abord aux figures 1 à 3 relatives à une première réalisation d'un dispositif selon l'invention de fixation d'un tuyau souple 10, par exemple une durite d'un radiateur ou une durite de chauffage d'un moteur d'automobile, sur un embout 11, le plus simplement un segment de tube à section droite circulaire et dont l'extrémité libre présente un léger bourrelet 12. Le dispositif selon l'invention comprend un manchon 13 en un matériau thermorétractable cylindrique dont la longueur est sensiblement celle de l'embout 11 et qui est solidarisé par sa face interne 14 avec la face externe 15 du tuyau 10 sur la totalité ou une partie seulement de sa longueur. Pour la solidarisation du manchon 13 et du tuyau 10 on garnit d'abord ladite face externe et/ou la face interne 14 du manchon 13 d'une couche ou film d'adhésif 16, par exemple une colle du type thermoplastique et les pièces ainsi préparées sont placées coaxialement l'une à l'autre, comme montré sur la figure 1, sous réserve que la représentation est très schématique et, qu'en fait, le diamètre de la face interne du manchon est très légèrement supérieur au diamètre de la face externe 15 du tutau de sorte que lesdites surfaces sont sensiblement au contact l'une de l'autre avec interposition entre elles de la couche ou film d'adhésif 16. Lorsqu'un premier chauffage est appliqué à l'ensemble tuyau-manchon, par exemple à l'aide d'une buse 17 de distribution d'air chaud, ou par tout autre moyen analogue, le manchon 13 subit un premier rétreint qui applique fermement sa face interne 14 sur la face externe 15 du tuyau avec pour résultat de rendre solidaires, par l'intermédiaire de l'adhésif 16, le manchon et le tuyau qui forment un ensemble unitaire lequel peut être manipulé sans crainte de séparation des deux pièces l'une par rapport à l'autre et qui peut ainsi être stocké et géré en tant que pièce unique, par exemple dans un magasin d'une chaîne de montage d'automobiles. Par un choix approprié des caractéristiques du matériau constitutif du manchon 13 et/ou de son dimensionnement par rapport au tuyau, en particulier de son épaisseur, le tuyau et le manchon forment un dispositif unitaire 18 qui peut être saisi et manipulé par un robot, ou analogue, sans subir de déformations ni être endommagé de sorte que, sur une chaîne de montage, le dispositif 18 peut être mis en place automatiquement sur l'embout 11 par une automatisation relativement simple puisqu'elle consiste uniquement à le positionner coaxialement à l'embout 11 puis à le rapprocher à emmanchement sur ledit embout. Dans cette condition, montrée sur la figure 3, un pistolet à air chaud 19 ou tout autre moyen analogue est alors mis en oeuvre pour chauffer une nouvelle fois le manchon 13 et provoquer un nouveau rétreint de celui-ci et, par suite, l'application à pression avec étanchéité du tuyau 10 sur l'embout 11.

Si l'on prévoit, complémentairement, de munir le manchon d'un marquage, par exemple sous forme d'un anneau 20 de peinture thermochromique, le changement de couleur dudit anneau permet d'assurer de façon simple que la température de rétreint du matériau est atteinte et qu'ainsi sont respectées les caractéristiques pré-établies de montage.

Une telle température peut être avantageusement choisie pour être au moins de l'ordre de 90 à 135°C.

En outre, et en particulier pour des durites de chauffage, le matériau constitutif du manchon 13 est choisi pour éviter que lors de l'utilisation du dispositif ledit manchon n'ait tendance à reprendre ses dimensions initiales sous le fait d'un échauffement localisé dans le domaine des températures d'utilisation, qui peut être de l'ordre de 55 à 175°C.

Le matériau est également choisi pour résister aux détériorations éventuelles par projection d'huile, de gazole, ou d'essence ainsi que pour présenter une bonne tenue au fluage et de bonnes caractéristiques de vieillissement en température.

Un matériau satisfaisant à ces conditions peut être choisi dans le groupe constitué par les polyoléfines modifiées, les polyéthylènes et les polypropylènes.

De tels matériaux, qui présentent aussi de bonnes qualités de rigidité, même sous de faibles épaisseurs, ont conduit à des résultats particulièrement satisfaisants.

D'autres matériaux peuvent également être envisagés, dont les caractéristiques de rigidité sont moins bonnes à faible épaisseur, mais que l'on comprense alors par un dimensionnement approprié du manchon, en particulier de son épaisseur.

## EXEMPLE

Pour la fixation d'un tuyau souple d'un diamètre de 25 x 32, sur un embout d'un diamètre de 25,5 mm un manchon d'un diamètre de 34 mm et d'une longueur de 30 mm a été façonné en un matériau du type polyproplène connu sous le nom de ELTEX P (marque déposée de la Société SOLVAY et Cie) avec une épaisseur de 2 mm.

Il a été solidarisé avec le tuyau ou durite 10 à l'aide d'une colle du type thermoplastique (hot melt) et la fixation du manchon sur la durite a été assurée par un premier chauffage à une température de 115°C.

On constate que le rétreint est de 10 % environ et que l'on obtient, de la sorte, un dispositif 18, rigide qui, lorsqu'il est rapporté sur l'embout 11 et soumis à un nouveau chauffage à une température de 150°C subit un nouveau rétreint assurant la fixation étanche du tuyau sur l'embout comme montré par les essais de pulsations alternées de 0,05 à 0,25 MPa à 130°C et à une fréquence de o,5 Hz.

On se refère maintenant aux figures 4 et 5 qui montrent une autre réalisation du dispositif selon l'invention prévue pour faciliter la mise en place du dispositif sur l'embout 11. Dans cette réalisation, le tuyau 10 est évasé à son extrémité libre suivant une tulipe 21 et le manchon 22, dont la surface interne 23 est d'un diamètre interne supérieur à la partie de plus grand diamètre de la tulipe 21 dans sa condition initiale est placé coaxialement au tuyau 10 après que sa surface interne et/ou la surface externe du tuyau ait été garnie sur la totalité ou une partie de la longueur seulement de manchon d'une couche ou d'un film d'adhésif 24. Dans cette réalisation, le manchon 22 en matériau rétractable ne subit pas un premier chauffage à l'aide d'une buse à air chaud ou analogue 17 sur la totalité de sa longueur, comme dans la réalisation précédente, mais sur une partie seulement, de sorte que le manchon 22 n'est rendu que partiellement solidaire du tuyau 10.

Dans la réalisation illustrée sur les figures 6 à 8, elles aussi très schématiques, en particulier en ce qui concerne les distances relatives du tuyau 10 et du manchon 25, une couche ou film d'adhésif 27 est déposée sur la face interne 26 du manchon en matériau thermorétractable et/ ou sur la face externe du tuyau 10 puis le manchon et le tuyau sont placés coaxialement l'un à l'autre et de manière que la tranche 29 de l'extrémité libre du tuyau au lieu d'affleurer l'extrémité libre 28 du manchon, comme dans la réalisation précédente, soit placée à l'intérieur dudit manchon.

La fixation de ce dernier sur le tuyau est alors effectuée comme dans la réalisation des figures 4 et 5 sous réserve, toutefois, que dans cette réalisation, l'extrémité libre du tuyau 10 n'est par évasée en tulipe.

Lorsque le dispositif 30, formé par le tuyau 10 et le manchon 25 qui en est rendu solidaire sur une partie de sa longueur est présenté au droit de l'embout 11, coaxialement à celui-ci, et que le dispositif est rapproché de l'embout, la condition est celle montrée sur la figure 8 c'est-à-dire que la tranche 29 du tuyau 10 vient au contact de la tranche 31 de l'embout 11 après que la partie initialement en saillie 32 du manchon 25 ait passé le bourrelet 12 et soit venu s'emmancher sur l'embout. Une application d'un courant d'air chaud à l'aide d'une buse 33 ou par tout autre moyen équivalent provoque alors un nouveau rétreint du manchon 25 lequel est ainsi appliqué avec une pression de serrage homogène sur l'embout 11 et sur le tuyau 10, ce qui assure simultanément une fixation simple et une excellente étanchéité à l'encontre d'un fluide circulant dans le tuyau et dans l'embout.

## Revendications

1. Dispositif de fixation l'une à l'autre de deux parties cylindriques à l'aide d'un manchon (13, 22, 25) en matériau thermorétractable choisi parmi les polymères rétractables, notamment les polyoléfines modifiées, les polyéthylènes et les polypropylènes et solidarisé par sa face interne (14, 23, 26) sur au moins une partie de sa longueur avec la face externe d'une première desdites parties, caractérisé en ce que ladite première partie est un tuyau souple (10) et l'autre partie un embout (11), ledit manchon (13, 22, 25) qui est rétracté sur le tuyau souple (10) par un premier chauffage ayant des dimensions telles et étant réalisé en un matériau thermorétractable de caractéristiques telles que l'ensemble du tuyau et du manchon (18, 30) a une rigidité structurelle suffisante pour permettre sa manipulation sans détériorations à l'aide d'un manipulateur, d'un robot ou analogue lors de la mise en place du tuyau et du manchon formant un ensemble unitaire sur l'embout (11) où la fixation a lieu en provoquant un deuxième rétreint dudit manchon (13, 22, 25) thermorétractable.

2. Dispositif selon la revendication 1, caractérisé en ce que le manchon est de forme cylindrique et est solidaire du tuyau souple (10) sur la totalité ou quasi-totalité de sa longueur, une de ses extrémités affleurant l'extrémité du tuyau (10) dont il est solidaire.

3. Dispositif selon la revendication 1, caractérisé en ce que le manchon est de forme cylindrique et est solidaire du tuyau souple (10) sur une partie seulement de sa longueur.

4. Dispositif selon la revendication 3, caractérisé en ce que le manchon (25) comporte une partie en saillie par rapport à la tranche d'extrémité (29) du tuyau (10).

5. Dispositif selon l'une quelconque des revendications précédentes, caractérisé en ce que l'extrémité libre du manchon (22, 25) la plus voisine de l'extrémité du tuyau (10) est évasée en tulipe.

6. Dispositif selon la revendication 5, caractérisé en ce que l'extrémité en tulipe du manchon (22) affleure celle du tuyau (10).

7. Dispositif selon la revendication 5, caractérisé en ce que l'extrémité en tulipe du manchon (25) s'étend au-delà de l'extrémité libre du tuyau (10) de sorte qu'après montage du dispositif sur un embout (11) le manchon (25) recouvre et enserre à la fois le tuyau et ledit embout.

8. Dispositif selon l'une quelconque des revendications précédentes, caractérisé en ce que le matériau constitutif du manchon est choisi pour présenter un rapport de rétreint de l'ordre de 1,5 à 3 et une température de rétreint d'au moins 90° - 135°C.

9.Procédé de montage d'un tuyau souple sur un embout, caractérisé en ce que l'on forme un manchon en un matériau thermorétractable d'un diamètre légèrement supérieur à celui du tuyau, en ce que l'on rapporte sur la face interne du manchon et/ou sur la face externe du tuyau un adhésif destiné à assurer la solidarisation du manchon et du tuyau, en ce que l'on dispose le manchon sur l'extrémité du tuyau souple, en ce que l'on effectue un chauffage localisé sur au moins une partie du manchon pour provoquer un pré-rétreint de celui-ci et, par suite, la solidarisation d'au moins une partie du manchon et du tuyau, en ce que l'on met en place sur l'embout l'ensemble unitaire de rigidité suffisante formé par le tuyau et le manchon, et en ce que l'on procède à une nouvelle opération de chauffage du manchon pour provoquer un rétreint qui assure la solidarisation étanche du tuyau sur l'embout.

## Claims

1. A device for fixing two cylindrical parts together by means of a sleeve (13, 22, 25) of heat-shrinkable material selected from among the shrinkable polymers, particularly modified polyolefins, polyethylenes and polypropylenes, and rigidly connected, by its internal face (14, 23, 26), over at least a portion of its length, to the external face of a first of said parts, characterized in that said first part is a hose (10) and the other part is a nipple (11), said sleeve (13, 22, 25), which is shrunk onto the hose (10) by a first heating, having such dimensions and being made of a heat-shrinkable material having such characteristics that the assembly of the hose and of the sleeve (18, 30) has sufficient structural rigidity to permit its manipulation without damage by means of a manipulator, of a robot or the like when the hose and the sleeve forming a unified assembly are placed in position on the nipple (11) where the fixing takes place by causing a second shrinkage of said heat-shrinkable sleeve (13, 22, 25).

2. A device according to Claim 1, characterised in that the sleeve is cylindrical in shape and is rigidly connected to the hose (10) over the whole or almost the whole of its length, one of its ends being flush with the end of the hose (10) to which it is rigidly connected.

3. A device according to Claim 1, characterised in that the sleeve is cylindrical in shape and is rigidly connected to the hose (10) over only a portion of its length.

4. A device according to Claim 3, characterised in that the sleeve (25) comprises a portion projecting in relation to the end edge (29) of the hose (10).

5. A device according to any one of the preceding claims, characterised in that the free end of the sleeve (22, 25) nearest to the end of the hose (10) is widened out in a bell shape.

6. A device according to Claim 5, characterised in that the bell-shaped end of the sleeve (22) is flush with the end of the hose (10).

7. A device according to Claim 5, characterised in that the bell-shaped end of the sleeve (25) extends beyond the free end of the hose (10) in such a manner that after the device is mounted on a nipple (11), the sleeve (25) covers and surrounds both the hose and said nipple.

8. A device according to any one of the preceding claims, characterised in that the material constituting the sleeve is selected to have a shrinkage ratio of the order of 1.5 to 3 and a shrinkage temperature of at least 90°–135°C.

9. A method of mounting a hose on a nipple, characterised in that a sleeve having a diameter slightly larger than that of the hose is formed from heat-shrinkable material, in that an adhesive adapted to ensure the rigid connection of the sleeve and of the hose is applied to the internal face of the sleeve and/or to the external face of the hose, in that the sleeve is disposed on the end of the hose, in that heating is effected located on at least one portion of the sleeve to cause a pre-shrinking of this and consequently the rigid connection of at least one portion of the sleeve and of the hose, in that the unified assembly of sufficient rigidity formed by the hose and the sleeve is placed in position on the nipple, and in that a fresh operation of heating the sleeve is effected to cause a shrinkage which ensures the fluid-tight connection of the hose to the nipple.

## Patentansprüche

1. Vorrichtung zum Befestigen von zwei zylindrischen Teilen aneinander mit Hilfe einer Hülse (13, 22, 25) aus einem wärmeschrumpfbaren Material, das unter den schrumpfbaren Polymeren, insbesondere den modifizierten Polyolefinen, den Polyethylenen und den Polypropylenen, ausgewählt ist, und die fest durch ihre Innenfläche (14, 23, 26) über wenigstens einen Teil ihrer Länge mit der Außenfläche eines ersten dieser Teile verbunden ist, dadurch gekennzeichnet, daß das erwähnte erste Teil ein Schlauch (10) und das andere Teil ein Übergangsrohrstück (11) ist, wobei diese Hülse (13, 22, 25), die durch eine erste Erwärmung über den Schlauch (10) geschrumpft ist, solche Dimensionen hat und aus einem wärmeschrumpfbaren Material mit solchen Eigenschaften realisiert ist, daß die Gesamtheit des Schlauchs und der Hülse (18, 30) eine strukturelle Steifigkeit hat, die ausreichend ist, um ihre Manipulation ohne Beschädigungen mit Hilfe eines Manipulators, eines Roboters oder ähnlichem während des Aufbringens des Schlauchs und der Hülse, die eine einheitliche Gesamtheit bilden, auf dem Übergangsrohrstück (11) zu ermöglichen, wo die Befestigung stattfindet, indem ein zweites Einziehen der wärmeschrumpfbaren Hülse (13, 22, 25) bewirkt wird.

2. Vorrichtung nach Anspruch 1, dadurch gekennzeichnet, daß die Hülse von zylindrischer Form ist und fest mit dem Schlauch (10) über die Gesamtheit oder Quasigesamtheit ihrer Länge fest verbunden ist, wobei eines ihrer Enden auf das Ende des Schlauchs (10), mit dem sie fest verbunden ist, abglichen ist.

3. Vorrichtung nach Anspruch 1, dadurch gekennzeichnet, daß die Hülse von zylindrischer Form ist und mit dem Schlauch (10) über nur einen Teil ihrer Länge fest verbunden ist.

4. Vorrichtung nach Anspruch 3, dadurch gekennzeichnet, daß die Hülse (25) einen Teil hat, der mit Bezug auf die Schnittfläche des Endes (29) des Schlauchs (10) vorspringend ist.

5. Vorrichtung nach irgendeinem der vorhergehenden Ansprüche, dadurch gekennzeichnet, daß das freie Ende der Hülse (22, 25), das dem Ende des Schlauchs (10) am nächsten ist, tulpenartig erweitert ist.

6. Vorrichtung nach Anspruch 5, dadurch gekennzeichnet, daß das tulpenartige Ende der Hülse (22) mit demjenigen des Schlauchs (10) abgeglichen ist.

7. Vorrichtung nach Anspruch 5, dadurch gekennzeichnet, daß sich das tulpenartige Ende der Hülse (25) über das freie Ende des Schlauchs (10) in der Weise hinweg ersteckt, daß die Hülse (25) nach der Montage der Vorrichtung auf einem Übergangsrohrstück (11) gleichzeitig den Schlauch und das Übergangsrohrstück bedeckt und umfaßt.

8. Vorrichtung nach irgendeinem der vorhergehenden Ansprüche, dadurch gekennzeichnet, daß das die Hülse bildende Material so gewählt ist, daß es ein Einziehverhältnis in der Größenordnung von 1,5 bis 3 und eine Einziehtemperatur von wenigstens 90°C bis 135°C aufweist.

9. Verfahren zur Montage eines Schlauchs auf einem Übergangsrohrstück, dadurch gekennzeichnet, daß man eine Hülse aus einem wärmeschrumpfbarem Material eines Durchmessers, der ein wenig über demjenigen des Schlauchs liegt, ausbildet, daß man auf die Innenfläche der Hülse und/oder auf die Außenfläche des Schlauchs einen Klebstoff aufbringt, der dazu bestimmt ist, die feste Verbindung der Hülse und des Schlauchs sicherzustellen, daß man die Hülse über dem Ende des Schlauchs anordnet, daß man eine auf wenigstens einen Teil der Hülse lokalisierte Erwärmung bewirkt, und zwar zum Hervorrufen eines Voreinziehens derselben und nachfolgend der festen Verbindung von wenigstens einem Teil der Hülse und des Schlauchs, daß man auf dem Übergangsrohrstück die einheitliche Gesamtheit von genügender Steifigkeit, die von dem Schlauch und der Hülse gebildet ist, aufbringt, und daß man einen neuen Vorgang des Erwärmens der Hülse zum Hervorrufen eines Einziehens, welches die feste, dichte Verbindung des Schlauchs auf dem Übergangsrohrstück sicherstellt, durchführt.

FIG.1

FIG.2

FIG.3

FIG.4

FIG.5

FIG.6

FIG.7

FIG.8